# EUROPEAN PATENT SPECIFICATION

(11) **EP 1 501 204 B1**
(45) Date of publication and mention of the grant of the patent: **26.04.2006**
(21) Application number: 04025423.7
(22) Date of filing: 10.02.2000
(51) Int. Cl.: H04B 1/707

(54) **Asymmetrical forward/reverse transmission bandwidth in a CDMA system**
Asymmetrische Auf- und Abwärtsübertragungsbandbreite in einem CDMA-System
Largeur de bande de transmission montante/descendante asymétrique dans un système AMRC

(43) Date of publication of application: 26.01.2005
(62) Divisional of application: 00907229.9
(73) Proprietor: INTERDIGITAL TECHNOLOGY CORPORATION, Wilmington, DE 19801 (US)
(72) Inventor: Ozluturk, Fatih, Port Washington, NY 11050 (US)
(74) Representative: Frohwitter, Bernhard

(56) References cited:
- WO-A-99/00911
- US-A- 5 946 344

## Description

### BACKGROUND

The present invention relates to wireless digital communications systems. More particularly, the present invention relates to code-division multiple access (CDMA) communication systems where a subscriber unit and a base station communicate with each other using different bandwidths.

CDMA systems provide an efficient use of the limited bandwidth of the RF spectrum, thereby permitting a greater amount of information transmission with less signal distortion than communications systems using other techniques, such as time division multiple access and frequency division multiple access.

In a CDMA communication system, an information signal at the transmitter is mixed with a pseudo-random spreading code which spreads the information across the entire bandwidth employed by the system. The spread signal is upconverted to an RF signal for transmission. A receiver, identified by the same pseudo-random code, downconverts the transmitted spread-spectrum signal and mixes the downconverted signal with the same pseudo-random code that was used to spread the original information signal to reproduce the original information signal.

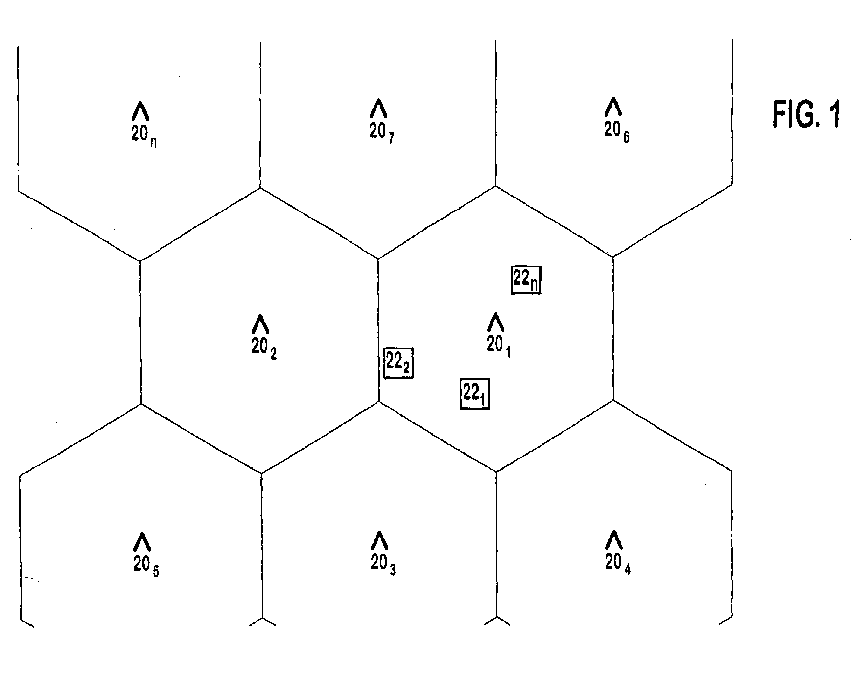

A prior art CDMA communication system is shown in **Figure 1**. The communication system has a plurality of base stations **20**_{**1**}, **20**_{**2**}, ... **20**_{**n**} connected together through land lines via a local public switched telephone network (PSTN) or by a wireless link. Each base station **20**_{**1**}, **20**_{**2**},.... **20**_{**n**} communicates using spread spectrum CDMA transmissions with mobile and field subscriber unit stations **22**_{**1**}**. 22**_{**2**}, ... **22**_{**n**} located within its cellular area.

In a typical prior art CDMA system, downlink bandwidth which is used by the base station to transmit to the subscriber unit, is the same as uplink bandwidth which is used by the subscriber unit to transmit to the base station. Symmetrical allocation of bandwidth is appropriate where the uplink and downlink data volumes are roughly equivalent, as in the case of voice communication. However, in some communication scenarios, allocation of equal bandwidth to uplink and downlink transmission is an inefficient use of the limited RF spectrum available to a wireless communication provider. For example, an individual using the Internet generally transmits a limited amount of data, which might include Internet addresses, search terms and typed responses to queries. In contrast, an Internet server generally responds to a user's request and the user receives large amounts of text, graphics and other forms of data. In this case, providing a larger downlink bandwidth for the transmission link from the base station to the subscriber and a smaller uplink bandwidth for transmission link from the subscriber to the base station permits a more efficient use of the total bandwidth allocated to the communication provider. Though the same total bandwidth is used in an asymmetrical bandwidth communication as in one where the uplink and downlink bandwidths are the same, in an asymmetrical communication the higher use downlink channel can send data more quickly by occupying a larger bandwidth without sacrificing performance of the uplink channel, which sends its limited quantity of data at a lower rate.

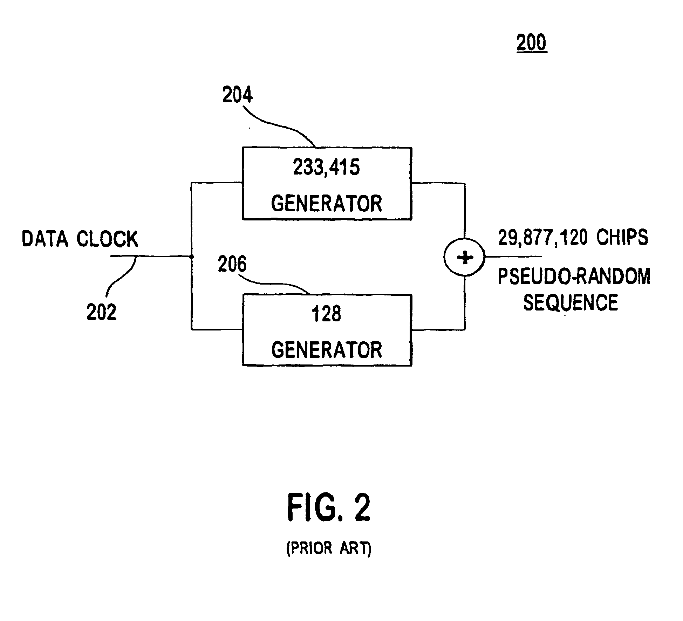

In a typical prior art CDMA system, a subscriber unit generates a pseudo-random spreading sequence which is repeated every 29,877,120 clock cycles. A full sequence is known in the art as an epoch. A prior art system **200** for generating a pseudo-random sequence is shown in **Figure 2**. A data clock **202** is fed to a first code generator **204** which creates a pseudo-random sequence of 233,415 chips, and to a second code generator **206** which creates a pseudo-random sequence of 128 chips. The outputs of these two generators are combined to produce a pseudo-random sequence of 233,415 x 128, which is 29,877,120 chips long. At the end of the sequence, the code generators **204, 206** restart the code from the beginning of the sequence.

When a subscriber unit first begins to transmit, its pseudo-random sequence is free-running. Its epoch is not synchronized with the epoch of the pseudo-random sequence being generated at the base station. Accordingly, the base station must search for the start of the pseudo-random code of the subscriber unit, which is a time-consuming process.

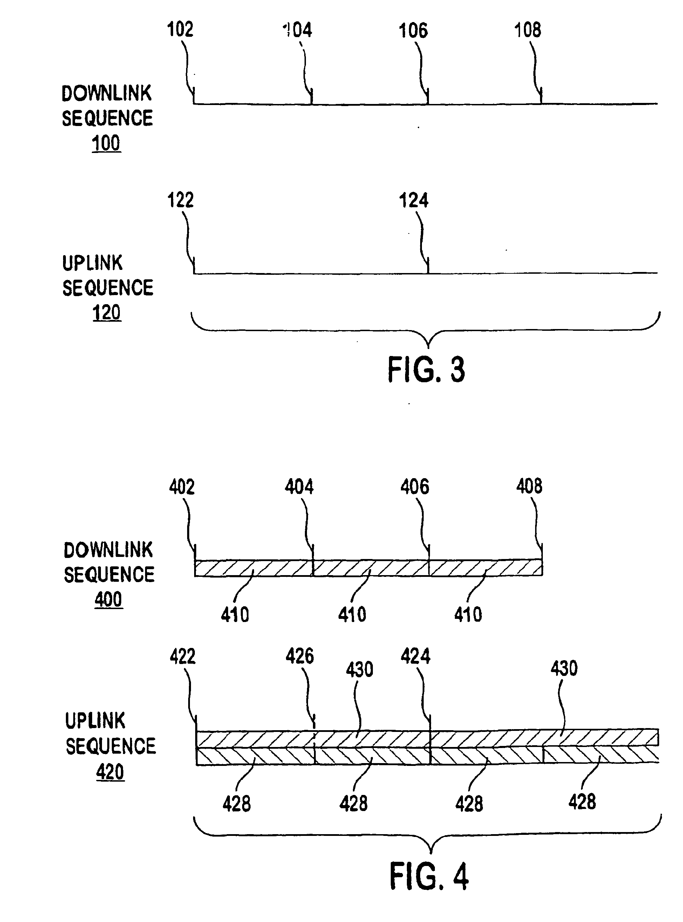

In a prior art system as described, the use of different bandwidths means that thepseudo-random spreading sequence is clocked at different rates for the uplink and the downlink. **Figure 3** shows epoch starting points for an uplink **120** and a downlink **100,** where the downlink clock rate is twice that of the uplink. As shown, the starting points for the uplink epoch, **122** and **124,** are aligned with every other downlink epoch starting point, **102** and **106.** This creates an ambiguity in that the subscriber unit, which is attempting to decode downlink data, is unaware of the start of the downlink epoch. For a downlink transmission that begins in the uplink epoch starting at **122,** the downlink starting point could be either **102** or **104.** This ambiguity causes the subscriber unit to search the entire sequence to find the starting point. This process consumes an unacceptably long amount of time, thus rendering impractical the use of asymmetrical bandwidths.

WO99/00911 describes a system for supporting asymmetric bandwidths in which a negotiation procedure is performed between a mobile station and a base station to select chip rates and bandwidths for use in the forward and reverse channels.

Consequently, the need exists for a CDMA system where the pseudo-random spreading codes of the uplink and downlink remain synchronous when the uplink bandwidth differs from the downlink bandwidth.

### SUMMARY

The present invention facilitates CDMA communication where the uplink and downlink transmission bandwidths are unequal. Asymmetric allocation of transmission bandwidth is advantageous where there is a disproportionate amount of information transmitted between uplink and downlink channels. In the present system, the higher bandwidth must be an integer multiple of the lower bandwidth. The system includes a base station and a subscriber unit which each have two pseudo-random code generators which can be clocked separately, two independent data clocks, and a modem interface which is capable of reading and writing data at different rates. Alignment of the uplink and downlink pseudo-random spreading codes is achieved by truncating the code sequence for the lower speed link at the conclusion of a complete code sequence for the higher speed link.

Objects and advantages of the present invention will become apparent after reading the detailed description of the presently preferred embodiment.

### BRIEF DESCRIPTION OF THE DRAWINGS

**Figure 1** is an illustration of a prior art CDMA system.
**Figure 2** is a block diagram of a prior art pseudo-random code sequence generator.
**Figure 3** is a diagram of spreading code epochs for different bandwidth uplink and downlink in a prior art system.
**Figure 4** is a diagram of spreading code epochs for different band width uplink and downlink in a prior art system.
**Figure 5** is a block diagram of a pseudo-random code sequence generator made in accordance with the present invention.
**Figure 6** is a block diagram of a base station made in accordance with the present invention.

### DETAILED DESCRIPTION OF THE PREFERRED EMBODIMENT(S)

The preferred embodiments will be described with reference to the drawing figures where like numerals represent like elements throughout.

The present invention allows communication in a CDMA system where the uplink and downlink bandwidths are of different size and are integer multiples of each other. The problem is illustrated in **Figure 3**, where epoch starting point ambiguity results when the pseudo-random code sequence epoch of one side of the communication, for example the downlink **100**, is shorter than that of the other side of the communication, for example the uplink **120**. This problem is addressed by truncating the pseudo-random code sequence of the lower bandwidth side of the communication at the end of the epoch for the higher bandwidth side.

**Figure 4** shows epoch starting points for an uplink **420** and downlink **400,** where the downlink clock-rate and bandwidth are twice those of the uplink. As shown, the starting points **422** and **424** for a complete uplink pseudo-random sequence **430** are aligned with every other starting point, **402** and **406** for a complete downlink pseudo-random sequence **410.** In order to maintain alignment between starting points of every pseudo-random sequence, the present invention truncates the pseudo-random sequence for the lower bandwidth signal at the point where the higher repetition rate downlink sequence restarts **426.** Hence, in the present invention, the communication side with the lower bandwidth and lower data rate produces a truncated pseudo-random sequence **428** that contains a fraction of the number of chips that are found in the full pseudo-random code sequence **430.** In the example illustrated in **Figure 4,** the ratio of downlink to uplink bandwidth is 2:1. Hence, the pseudo-random sequence for the uplink **428** would contain exactly one half the number of chips that are in the full sequence **430.** Where the bandwidth ratio is 3:1, the lower bandwidth sequence would be one third of the full sequence, and so on for other bandwidth ratios.

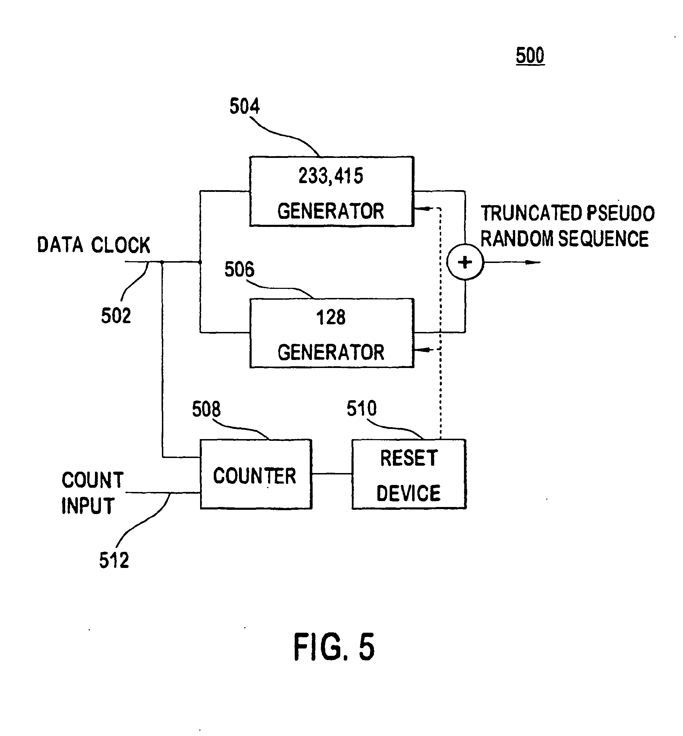

Referring to **Figure 5**, a pseudo-random sequence generator **500** is shown, which is capable of producing a truncated sequence in accordance with the present invention. The pseudo-random sequence generator **500** includes a data clock **502,** a counter **508.** a reset device **510** and two pseudo-random code generators **504, 506.** As should be well recognized by those of skill in the art, the required number of clock cycles depends upon the communication side with the higher bandwidth. Accordingly, this count is input into the counter **508** via a count input line **512.** The counter **508** is loaded to count the number of clock cycles output by the data clock **502.** When the required number of clock cycles has elapsed, the counter **508** signals a reset device **510,** which resets the two code generators **504, 506.**

The pseudo-random sequence generated by generator **504** contains 223,415 chips. This sequence is evenly divisible by 3, 5, 7, 9,13 and 19. The pseudo-random sequence generated by generator **506** contains 128 chips. This sequence is evenly divisible by multiples of 2, up to 128. Hence, the full pseudo-random sequence of 29,877,120 chips is evenly divisible by 2, 3, 4, 5 and other combinations of the factors of 128 and 223,415. For uplink/downlink bandwidth ratios that match these factors, precise truncation of the full sequence is possible. The present invention enables the low bandwidth side of the communication to complete its truncated pseudo-random epoch at the same time that the high bandwidth side is completing its epoch.

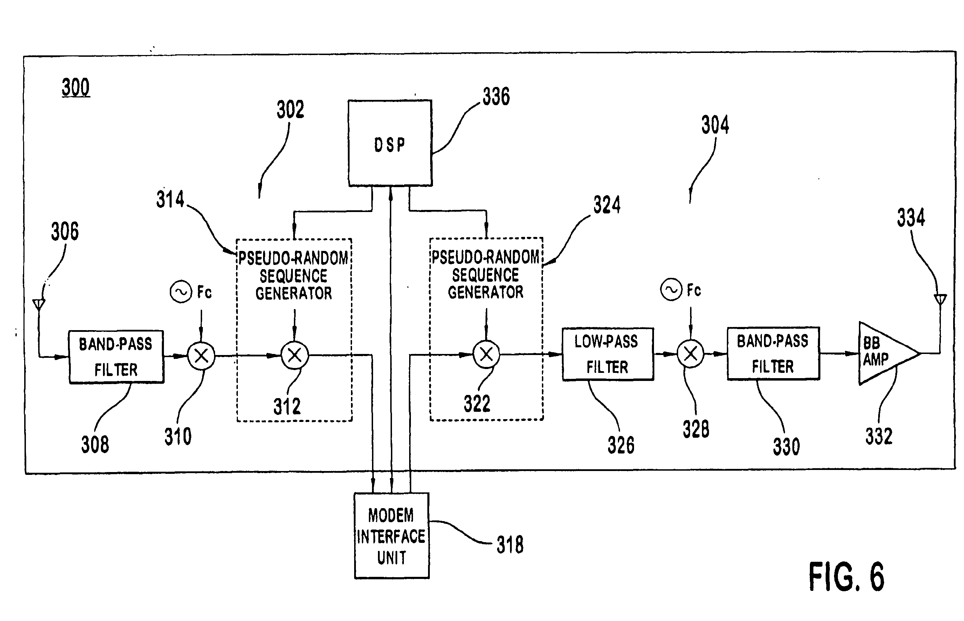

A base station **300** made in accordance with the present invention is shown in **Figure 6.** The base station **300** includes a receiver section **302,** a transmitter section **304** and a modem interface unit **318.** The modem interface unit **318** provides an interface between the receiver and transmitter sections **302, 304** of the base station **300** and the user. The modem interface unit **318** has an architecture and clocking that makes it possible to read and write data at different rates. This is made possible by using different and adjustable clock speeds. Details of such designs are known to those skilled in the art.

An antenna **306** receives a signal from the subscriber unit, which is filtered by a band-pass filter **308.** The output of the filter **308** is downconverted by a mixer **310** to a baseband signal using a constant frequency (Fc) local oscillator. The output of the mixer **310** is then spread spectrum decoded at each modem by applying a pseudo-random sequence to a mixer **312** within the pseudo-random Rx sequence generator **314.** The output of the mixer **312** is then forwarded to the modem interface unit **318.**

For transmission, a baseband signal is received from the modem interface unit 318. Preferably, a 32 kb/s ADPCM signal is used. The ADPCM or PCM signal is applied to a mixer **322** within the pseudo-random Tx sequence generator **324.** The mixer **322** multiplies the ADPCM or PCM data signal with the pseudo-random Tx sequence. The output of the mixer **322** is applied to low-pass filter **326.** The output of the filter **326** is then applied to a mixer **328** and suitably up-converted. The up-converted signal is then passed through a band-pass filter **330** and to a broadband RF amplifier **332** which drives an antenna **334.** Although two antennas **306, 334** are shown, the preferred embodiment includes a diplexer and only one antenna for transmission and reception.

The digital signal processor (DSP) **336** controls the acquisition process as well as the pseudo-random Rx and Tx sequence generators **314, 324.** In accordance with the present invention, the pseudo-random Rx and Tx sequence generators **314, 324** are clocked separately and independently by the DSP **336.** Accordingly, the data clocks (not shown) for the pseudo-random Rx and Tx sequence generators **314, 324** are separate and independent.

For a link to be established, both the base station **300** and subscriber unit must know what chip rates are used for uplink **120** and downlink **100.** This information may be exchanged between the base station **300** and the subscriber unit by sending each other messages containing this information at the time of every call establishment. Or, alternatively, this information, including chip rates used for uplink **120** and downlink **100** transmissions, may be a system parameter that is programmed into the subscriber unit and the base station **300.**

Although the invention has been described in part by making detailed reference to certain specific embodiments, such details is intended to be instructive rather than restrictive. It will be appreciated by those skilled in the art that many variations may be made in the structure and mode of operation of the invention as disclosed in the teachings herein.

## Claims

1. A communication system utilizing spreading code sequences, the system comprising:
(a) a first generator (314) adapted to output a first repetitious code sequence at a first data rate; and
(b) a second generator (324) adapted to output a second repetitious code sequence at a second data rate which is higher or lower than the first data rate, **characterized in that** the generators (314, 324) comprise means (508, 510, 512) adapted to truncate the code sequence with the lower data rate each time the code sequence with the higher data rate is completed.

2. The system of claim 1 wherein the higher data rate is an integer multiple-of the lower data rate.

3. The system of claim 1 wherein the system is a code-division multiple access (CDMA) communication system.

4. The system of claim 1 further comprising:
(c) a downlink data path in communication with the first generator, the downlink data path having a first bandwidth allocated thereto for sending the first code sequence at the first data rate; and
(d) an uplink data path in communication with the second generator, the uplink data path having a second bandwidth allocated thereto for sending the second code sequence at the second data rate, the bandwidth associated with the higher data rate being larger than the bandwidth associated with the lower data rate.

5. The system of claim 4 wherein the bandwidth associated with the higher data rate is an integer multiple of the bandwidth associated with the lower data rate.

6. The system of claim 1 further comprising a base station and a subscriber unit in communication with the base station.

7. A communication method utilizing spreading code sequences, the method comprising:
(a) generating a first repetitious code sequence at a first data rate;
(b) generating a second repetitious code sequence at a second data rate which is higher or lower than the first data rate; and **characterised by**
(c) truncating the code sequence with the lower data rate each time the code sequence with the higher data rate is completed.

8. The method of claim 7 wherein the higher data rate is an integer multiple of the lower data rate.

## Patentansprüche

1. Kommunikationssystem, das Spreizcodesequenzen verwendet, wobei das System aufweist:
(a) einen ersten Generator (314), der zum Ausgeben einer ersten sich wiederholenden Codesequenz mit einer ersten Datenrate ausgelegt ist; und
(b) einen zweiten Generator (324), der zum Ausgeben einer zweiten sich wiederholenden Codesequenz mit einer zweiten Datenrate ausgelegt ist, die höher oder niedriger als die erste Datenrate ist, **dadurch gekennzeichnet, dass** die Generatoren (314, 324) Mittel (508, 510, 512) aufweisen, die dazu ausgelegt sind, dass sie die Codesequenz mit der niedrigeren Datenrate jedes Mal dann abschneiden, wenn die Codesequenz mit der höheren Datenrate abgeschlossen ist.

2. System nach Anspruch 1, wobei die höhere Datenrate ein ganzzahliges Vielfaches der niedrigeren Datenrate beträgt.

3. System nach Anspruch 1, wobei das System ein Code-Division-Multiple-Access-(CDMA-)Kommunikationssystem ist.

4. System nach Anspruch 1, ferner mit:
(c) einem Abwärts-Datenpfad in Kommunikation mit dem ersten Generator, wobei dem Abwärts-Datenpfad eine erste Bandbreite zugewiesen ist, um die erste Codesequenz mit der ersten Datenrate zu senden; und
(d) einen Aufwärts-Datenpfad in Kommunikation mit dem zweiten Generator, wobei dem Aufwärts-Datenpfad eine zweite Datenrate zugewiesen ist, um die zweite Codesequenz mit der zweiten Datenrate zu senden, wobei die der höheren Datenrate zugeordnete Bandbreite größer als die Bandbreite ist, die der niedrigeren Datenrate zugeordnet ist.

5. System nach Anspruch 4, wobei die der höheren Datenrate zugeordnete Bandbreite ein ganzzahliges Vielfaches der Bandbreite beträgt, die der niedrigeren Datenrate zugeordnet ist.

6. System nach Anspruch 1, ferner mit einer Basisstation und einer Teilnehmereinheit in Kommunikation mit der Basisstation.

7. Kommunikationsverfahren, das Spreizcodesequenzen verwendet, wobei das Verfahren die folgenden Schritte aufweist:
(a) Erzeugen einer ersten sich wiederholenden Codesequenz mit einer ersten Datenrate;
(b) Erzeugen einer zweiten sich wiederholenden Codesequenz mit einer zweiten Datenrate, die höher oder niedriger als die erste Datenrate ist; und **gekennzeichnet durch**
(c) Abschneiden der Codesequenz mit der niedrigeren Datenrate jedes Mal dann, wenn die Codesequenz mit der höheren Datenrate abgeschlossen ist.

8. Verfahren nach Anspruch 7, bei dem die höhere Datenrate ein ganzzahliges Vielfaches der niedrigeren Datenrate beträgt.

## Revendications

1. Système de communication utilisant des séquences de codes d'étalement, le système comprenant :
(a) un premier générateur (314) adapté pour délivrer une première séquence de codes répétitive à un premier débit; et
(b) un second générateur (324) adapté pour délivrer une seconde séquence de codes répétitive à un second débit qui est supérieur ou inférieur au premier débit, **caractérisé en ce que** les générateurs (314, 324) comprennent des moyens (508, 510, 512) adaptés pour tronquer la séquence de codes avec le débit le plus faible chaque fois que la séquence de codes avec le débit le plus important est terminée.

2. Système selon la revendication 1 dans lequel le débit le plus important est un multiple entier du débit le plus faible.

3. Système selon la revendication 1 dans lequel le système est un système de communication à accès multiple par répartition en code (CDMA).

4. Système selon la revendication 1 comprenant en outre :
(c) un chemin de données descendant en communication avec le premier générateur, le chemin de données descendant possédant une première bande passante allouée à celui-ci pour envoyer la première séquence de codes avec le premier débit ; et
(d) un chemin de données montant en communication avec le second générateur, le chemin de données montant possédant une seconde bande passante allouée à celui-ci pour envoyer la seconde séquence de codes avec le second débit, la bande passante associée avec le débit le plus important étant plus large que la bande passante associée au débit le plus faible.

5. Système selon la revendication 4 dans lequel la bande passante associée au débit le plus important est un multiple entier de la bande passante associée au débit le plus faible.

6. Système selon la revendication 1 comprenant en outre une station de base et une unité d'abonné en communication avec la station de base.

7. Procédé de communication utilisant des séquences de codes d'étalement, le procédé comprenant :
(a) la génération d'une première séquence de codes répétitive à un premier débit ;
(b) la génération d'une seconde séquence de codes répétitive à un second débit qui est supérieur ou inférieur au premier débit ; et **caractérisé par**
(c) le tronquage de la séquence de codes avec le débit le plus faible chaque fois que la séquence de codes avec le débit le plus important est terminée.

8. Procédé selon la revendication 7 dans lequel le débit le plus important est un multiple entier du débit le plus faible.
